# FASCICULE DE BREVET EUROPEEN

(11) **EP 0 404 638 B1**
(45) Date de publication et mention de la délivrance du brevet: **19.01.1994**
(21) Numéro de dépôt: 90401629.2
(22) Date de dépôt: 13.06.1990
(51) Int. Cl.: F16L 33/28, B29C 65/02

(54) **Procédé pour équiper une canalisation en caoutchouc d'une bague de forme en un matériau similaire**
Verfahren um eine Kautschukleitung mit einem Ring aus ähnlichem Material auszurüsten
Method to equip a rubber pipe with a ring of a similar material

(30) Priorité: 20.06.1989 FR 8908563
(43) Date de publication de la demande: 27.12.1990
(73) Titulaire: AUTOMOBILES PEUGEOT, 75116 Paris (FR); AUTOMOBILES CITROEN, 92200 Neuilly-sur-Seine (FR)
(72) Inventeur: Piednoir, Philippe, F-35200 Rennes (FR)
(74) Mandataire: Boivin, Claude

(56) Documents cités:
- DE-A- 2 641 180
- DE-A- 3 440 569
- FR-A- 513 629
- FR-A- 2 178 487
- FR-A- 2 520 664
- US-A- 4 077 924
- Lueger, Lexikon der Technik, volume 3, 1961, pages 270, 271, 794; volume 8, 1967, page 495

## Description

La présente invention a pour but de réaliser une canalisation en caoutchouc munie d'une ou plusieurs bagues devant servir par exemple de protection, de butée ou de positionnement.

Jusqu'à présent ces bagues étaient surmoulées; le plus gros inconvénient est la nécessité de maintenir une contre-pression dans le diamètre intérieur de la canalisation pour supporter la pression dûe au surmoulage. Cette contre-pression est généralement obtenue par l'introduction de noyaux internes éclipsables dans la zone de surmoulage. Le noyau est préalablement enduit d'un agent lubrifiant pour faciliter son extraction. Ces opérations d'introduction et d'extraction des noyaux internes éclipsables peuvent blesser l'intérieur de la canalisation, et donc accélérer la déchéance de cette canalisation.
- afin de permettre une bonne adhérisation de la matière de surmoulage, il faut généralement aviver la surface de la pièce à l'endroit du surmoulage. Cette opération qui consiste à enlever quelques dizièmes de millimètre de caoutchouc à l'aide d'un outil coupant, d'une brosse métallique, d'une toile d'émeri ou d'une meule, risque aussi de provoquer des blessures sur le diamètre externe de la canalisation.
- Les zones à surmouler nécessitent un état de propreté parfait grâce à des solvants qui nuisent à la salubrité du poste de travail, et risquent de provoquer des incendies ou explosions dans l'atelier.
- Enfin, en ajoutant les temps d'introduction et d'extraction du noyau, de grattage, de vulcanisation et de la mobilisation de machines et d'outillages spécifiques, le coût de mise en oeuvre est élevé.

Le document FR-A- 513 629 décrit un procédé pour renforcer l'extrémité d'un tube en caoutchouc qui consiste à emmancher cette extrémité dans un second tube en caoutchouc et à vulcaniser ensuite les deux tubes.

L'invention a pour objet un procédé selon la revendication 1 qui évite les divers inconvénients mentionnées ci-dessus. Selon ce procédé, on chausse la bague non complètement vulcanisée sur la canalisation non vulcanisée, on chausse cette canalisation et la bague à l'état plastique sur un mandrin dont le diamètre est légèrement supérieur au diamètre de la canalisation et on procède ensuite à la co-vulcanisation simultanée de la canalisation et de la bague.

La bague peut être en caoutchouc ou en une matière thermoplastique; elle peut être réalisée par moulage ou par extrusion. Si la bague est moulée, le temps de vulcanisation lors du moulage peut être réduit au minimum, ce qui permet un gain de temps; la vulcanisation de la bague s'effectuera en même temps que la vulcanisation de la canalisation. Si la bague est extrudée, elle peut être montée complètement vulcanisée sur la canalisation après avoir été coupée à la longueur voulue; elle sera vulcanisée en même temps que la canalisation.

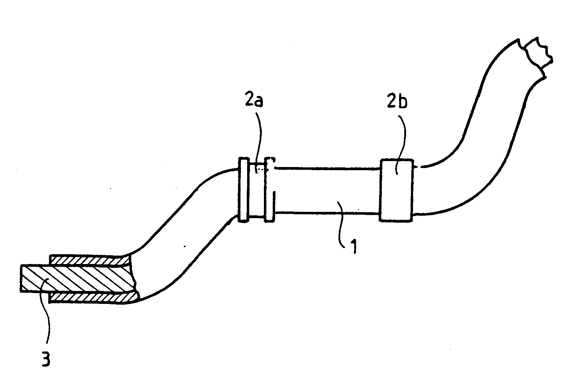

On a décrit ci-après, à titre d'exemple non limitatif, un mode de mise en oeuvre du procédé selon l'invention, avec référence à la Figure Unique du dessin annexé qui est une vue en élévation avec coupe partielle d'une canalisation munie de bagues.

Pour équiper une canalisation en caoutchouc 1 avec des bagues de formes telles que 2a et 2b, on monte les bagues, préalablement trempées dans l'eau pour faciliter leur glissement, sur la canalisation 1 non vulcanisée et mise à longueur. Les bagues sont en caoutchouc ou en matière plastique; elles peuvent être moulées ou extrudées. Si elles sont moulées, elles ne sont que partiellement vulcanisées; si elles sont extrudées, elles sont montées non complètement vulcanisées.

La canalisation 1 avec ses bagues est ensuite chaussée sur un mandrin 3 qui est constitué par une barre métallique ayant la forme de la canalisation à obtenir; son diamètre extérieur est légèrement supérieur au diamètre intérieur de la canalisation 1 à l'état libre de sorte que sa mise en place entraîne une dilatation de la canalisation et l'encastrement des bagues sur cette dernière.

On procède alors à la co-vulcanisation simultanée dans un autoclave de la canalisation et des bagues. Lors de cette vulcanisation, les bagues 2a et 2b subissent un léger retrait et adhèrent à la canalisation en s'y encastrant. L'adhérisation dépend des matières utilisées et elle est maximale pour deux caoutchoucs de nature chimique identique. Dans le cas de deux caoutchoucs de nature différente, on peut enduire d'un produit adhésif les surfaces de la canalisation 1 à baguer pour améliorer la tenue à l'arrachement.

Si la canalisation et les bagues sont en caoutchouc d'éthylène-propylène, en caoutchouc diénique ou en caoutchouc chloré, on procède à une co-vulcanisation respectivement au péroxyde, au soufre et à l'oxyde de zinc.

Le procédé peut être utilisé pour monter des bagues de forme quelconque, par exemple une bague de positionnement telle que représentée en 2a ou une bague de protection ou devant servir de butée, comme celle représentée en 2b.

Le procédé qui vient d'être décrit présente un certain nombre d'avantages :
- il ne nécessite aucun outillage spécifique, les machines utilisées étant des machines classiques de transformation des polymères.
- les bagues sont d'un coût moindre, car elles sont moulées dans un moule multi-empreintes. Le coût est encore plus faible pour les bagues extrudées et coupées.
- le chaussage de la bague et son positionnement sur la canalisation non vulcanisée ne nécessite pas d'outillage particulier, et le temps de mise en oeuvre est très court.
- l'opération de chaussage de bague vient s'intercaler dans le processus classique de réalisation d'une canalisation sans en modifier le contenu.
- les opérations d'introduction et d'extraction du noyau sont éliminées, ainsi que les opérations de ravivage et de nettoyage de la partie à surmouler. - enfin, le gain sur le coût total de ce procédé de réalisation par rapport au surmoulage classique peut atteindre 60%.

## Revendications

1. Procédé pour équiper une canalisation (1) en caoutchouc d'au moins une bague de forme (2a ou 2b) en caoutchouc ou en un matériau similaire, selon lequel on chausse la bague (2a ou 2b) non complètement vulcanisée sur la canalisation (1) non vulcanisée, on chausse cette canalisation et la bague à l'état plastique sur un mandrin (3) dont le diamètre est légèrement supérieur au diamètre de la canalisation (1) et on procède ensuite à la co-vulcanisation simultanée de la canalisation et de la bague.

2. Procédé selon la revendication 1,
caractérisé en ce qu'on trempe la bague dans l'eau avant de la chausser sur la canalisation.

3. Procédé selon la revendication 1 ou 2,
caractérisé en ce que la canalisation et la bague sont en caoutchouc d'éthylène-propylène et en ce qu'on procède à une co-vulcanisation au peroxyde.

4. Procédé selon la revendication 1 ou 2,
caractérisé en ce que la canalisation et la bague sont en caoutchouc diénique et en ce qu'on procède à une co-vulcanisation au soufre.

5. Procédé selon la revendication 1 ou 2,
caractérisé en ce que la canalisation et la bague sont en caoutchouc chloré et en ce qu'on procède à une co-vulcanisation à l'oxyde de zinc.

6. Procédé selon l'une quelconque des revendications précédentes,
caractérisé en ce que, la canalisation (1) et la bague (2a ou 2b) étant en caoutchouc de natures différentes, on enduit d'adhésif la surface à baguer avant de chausser la bague sur la canalisation.

7. Procédé selon l'une quelconque des revendications précédentes,
caractérisé en ce que la bague (2a ou 2b) étant réalisée par moulage, on procède à une pré-vulcanisation partielle de la bague avant son démoulage, et qu'on procède ensuite à l'engagement de la bague sur la canalisation et à la co-vulcanisation définitive de la canalisation et de la bague.

## Patentansprüche

1. Verfahren um eine Kautschukleitung mit mindestens einem Formring (2a oder 2b) aus Kautschuk oder einem ähnlichen Material auszurüsten, bei dem man den nicht vollständig vukanisierten Ring (2a oder 2b) auf die nicht vulkanisierte Leitung (1) aufzieht, diese Leitung und den Ring im plastischen Zustand auf einen Dorn (3) aufzieht, dessen Durchmesser geringfügig größer ist als der Durchmesser der Leitung (1), und man dann das gleichzeitige Zusammenvulkanisieren der Leitung und des Ringes durchführt.

2. Verfahren nach Anspruch 1, dadurch gekennzeichnet, daß man den Ring vor dem Aufziehen auf die Leitung in Wasser einweicht.

3. Verfahren nach Anspruch 1 oder 2, dadurch gekennzeichnet, daß die Leitung und der Ring aus Ethylen-Propylen-Kautschuk bestehen und daß man ein Zusammenvulkanisieren mit Peroxid durchführt.

4. Verfahren nach Anspruch 1 oder 2, dadurch gekennzeichnet, daß die Leitung und der Ring aus dienhaltigem Kautschuk bestehen und daß man ein Zusammenvulkanisieren mit Schwefel durchführt.

5. Verfahren nach Anspruch 1 oder 2, dadurch gekennzeichnet, daß die Leitung und der Ring aus chloriertem Kautschuk bestehen und daß man ein Zusammenvulkanisieren mit Zinkoxid durchführt.

6. Verfahren nach einem der vorhergehenden Ansprüche, dadurch gekennzeichnet, daß man, wenn die Leitung (1) und der Ring (2a oder 2b) aus Kautschuk unterschiedlicher Art bestehen, die mit dem Ring zu versehene Oberfläche vor dem Aufziehen des Ringes auf die Leitung mit einem Kleber überzieht.

7. Verfahren nach einem der vorhergehenden Ansprüche, dadurch gekennzeichnet, daß man, wenn der Ring (2a oder 2b) durch Formung hergestellt ist, eine teilweise Vorvulkanisierung des Ringes vor seiner Entformung durchführt und daß man dann das Aufbringen des Ringes auf die Leitung und das endgültige Zusammenvulkanisieren der Leitung und des Ringes durchführt.

## Claims

1. Method for equipping a rubber pipe (1) with at least one ring (2a or 2b) made of rubber or a similar material, wherein the ring (2a or 2b), not fully vulcanized, is fitted on the unvulcanized pipe (1), this pipe and ring being fitted in a plastic state on a mandrel (3) whose diameter is slightly larger than the diameter of the pipe (1), followed by the simultaneous vulcanization of the pipe and the ring.

2. Method according to claim 1,
wherein the ring is hardened in water before fitting it on the pipe.

3. Method according to claim 1 or 2,
wherein the pipe and the ring are made of ethylene propylene rubber and wherein said pipe and said ring are both vulcanized with peroxide.

4. Method according to claim 1 or 2,
wherein the pipe and the ring are made of rubber containing diene and wherein said pipe and said ring are vulcanized with sulfur.

5. Method according to claim 1 or 2,
wherein the pipe and the ring are made of chlorinated rubber and are vulcanized with zinc oxide.

6. Method according to any one of the preceding claims,
wherein, when the pipe (1) and the ring (2a or 2b) are made of rubber of different natures, the surface to be ringed being coated with adhesive before fitting the ring on the pipe.

7. Method according to any one of the preceding claims,
wherein, as the ring is embodied by moulding, the ring is partially pre-vulcanized before being removed from the mould and the ring is engaged on the pipe and both the pipe and ring are vulcanized.
